# EUROPEAN PATENT APPLICATION

(11) **EP 0 546 236 A2**
(43) Date of publication of application: **16.06.1993**
(21) Application number: 92102383.4
(22) Date of filing: 13.02.1992
(51) Int. Cl.: C03B 11/02, C03B 11/06, C03B 9/48, C03B 11/12

(54) **Mold for forming vessel made of glass**

(30) Priority: 09.12.1991 JP 323576/91
(71) Applicant: SHIBA R & D CO., LTD., Miura-gun, Kanagawa-ken (JP)
(72) Inventor: Bando, Yutaka, Akashi-shi, Hyogo-ken (JP); Tujimoto, Osamu, Warabi-shi, Saitama-ken (JP); Kano, Hiromi, Kawagoe-shi, Saitama-ken (JP)
(74) Representative: Oppermann, Ewald, Dipl.-Ing.

(57) **Abstract**

A mold comprising a work section (12, 31, 41) in contact with a gob of molten glass (8), and a radiating section (13, 32, 42) in contact with a coolant and provided onto an outside portion or an inside portion of the work section (12, 31, 41). The work section (12, 31, 41) has heat resistance, wear and abrasion resistance and made of an alloy having a wettability suitable for the gob of molten glass (8), and the radiating section (13, 32, 42) being made of metal or alloy of which coefficient of thermal conductivity is greater than that of the work section (12, 31, 41).

## Description

The present invention relates to a mold for forming various kinds of vessels such as bottle and cup made of glass, and more particularly, it relates to a mold capable of forming the with a higher efficiency without impairing the characteristic of the work surface of the mold.

In the case where the vessels are industrially produced in mass production, a gob of molten or half-molten glass is usually dropped into each of the molds and molded by the press form or blow form technique. While using molds having a desired shape, a cup or an bottle, for example, are produced according to various kinds of molding manners such as the press form, blow and blow form, press and blow form, and press and vacuum form.

The mold serves to form the molten glass to a desired shape product and to absorb heat from the work thus molded to cool it at a predetermined speed. Therefore, the shape and the material of the mold are made add great influence to the quality of products and full consideration must be paid to them when a mold is to be designed. Particularly in a case where product, different in thickness at various portions thereof and complicated in shape, is to be produced, they must be selected so as to enable these portions of the work to be uniformly cooled.

The mold for forming thermoplastic resin or glass to a desired shape is designed to discharge heat into atmosphere or exchange heat with a coolant every molding cycle in order to absorb heat from the work of high temperature.

When glass is being stably molded according to the press molding manner, that work surface of the mold which is contacted with glass is kept to have a temperature of 500 - 600 _{°} C. When this temperature range is not kept at the work surface of the mold, products molded are likely to often have flaws, thereby causing the production to be stopped if necessary. Therefore, the mold must be designed and used so as to keep its work surface in the optimum temperature range.

The press molding manner is carried out using molds each being a combination of body and lower frames, a push-up rod, an eye metal and a plunger. The body and lower frames and the push-up rod are combined as a unit and the molds thus combined are arranged on a circular turntable along the outer rim thereof at a certain interval. Each of the molds is mounted on the turntable with a basket seated in this case. On the other hand, the plunger and the eye metal are combined as a unit and this combination is arranged above the turntable, facing the open top of the combined mold (which will be hereinafter referred to as block mold) on the turntable.

While intermittently rotating the turntable, a certain amount of gob is supplied into each of the molds and the plunger is pushed into it to press- mold the gob in it. The gob thus molded in each of the molds is then cooled. While intermittently rotating the turntable, it is cooled until it can be handled. After it is fully cooled and hardened, it is taken out of the mold.

As described above, the mold functions to mold the half-molten glass into a desired shape and absorb heat from the work thus molded to cool it. In the case of the conventional molds, however, stress is placed on their cooling function, and stainless steel is mainly selected as their material to increase their wear- and abrasion resistance and oxidization-resistance at the time of molding process.

Nickel alloy or cobalt alloy is also flame-sprayed onto the mold parent material to enhance the surface characteristic of the mold. In this case, however, the thickness of nickel alloy or cobalt alloy flame-sprayed on the material is quite small. It is therefore as if the flame-sprayed nickel alloy or cobalt alloy was not present on the material, thereby leaving the cooling function of the mold not improved.

In order to improve the cooling function of the mold, therefore, cooling fins are formed round the body frame of the mold to quickly take heat from the half-molten glass in the body frame and harden it for short time. Even when cooling air is blown to the body frame, however, the half-molten glass cannot be fully cooled only by the cooling fins. As a result, thick portions of the work in the mold are deformed.

Published Examined Japanese Patent Application 55-11618 (which claims its priority date on corresponding German Patent Application DEP2537037.0 filed on August 20, 1975) discloses a molding apparatus wherein plural vertical passages are formed in each of the molds and cooling water is caused to flow through these passages to cool the mold.

Published Examined Japanese Patent Application 59-12609 (which claims its priority date on corresponding German patent Application DEP3040311.3 filed on October 25, 1980) also discloses a molding apparatus provided with the same cooling means as disclosed in PEJPA 55-11618.

When the half-molten glass in each of the molds cannot be fully cooled by the above-mentioned cooling means, copper pins are inserted the body of mold for cooling. Copper pins which serve as cooling metal are also inserted into recesses of each of the molds.

On the other hand, when heat balance of the mold is not good, bushes or other members are inserted the body of mold for insulating. When the molds are repeatedly used for a long time in this case, however, clearance is caused between the copper pin and the recess of the mold to thereby lower the thermal conductivity of the mold.

When materials have an excellent heat-proof- ness, they are usually low coefficient of thermal conductivity. When the mold is made of heat-proof alloy to keep its life long, therefore, the time needed to finish one molding cycle becomes long because of the lack of cooling capacity. As a result, the productivity is thus lowered.

In contrast, when the time of one molding cycle is shortened to increase the productivity, the temperature of the work surface of the mold becomes too high. Glass to be molded is thus bonded to the inner face of the mold, thereby also lowering the productivity.

The conventional stainless-steel-made mold, the one having a cobalt- or nickel-alloy-flame-sprayed inner face and the one having a chromium-plated inner face are excellent in heat-, wear-and oxidization-resistances but low in thermal conductivity. The work surface of each of these molds therefore is likely to become higher than the above-mentioned optimum temperature range. When the mold is made of heat-resistant alloy, therefore, the time of one molding cycle becomes long, thereby lowering the productivity.

The object of the present invention is therefore to provide a mold for forming vessel made of glass, higher in efficiency and longer in life, but capable of molding vessels without causing any faults such as breaks in them.

According to an aspect of the present invention, a mold comprising, a work section being in contact with a gob of molten glass, and a radiating section being in contact with a coolant and provided onto an outside portion of an inside portion of the work section. The work section has heat resistance, wear and abrasion resistance and made of an alloy having a wettability suitable for the gob of molten metal. The radiating section is made of a metal or alloy of which coefficient of thermal conductivity is greater than that of the work section.

It is preferable in this case that the work surface of the mold which is contacted with molten or half-molten glass is made of cobalt alloy or nickel alloy or stainless steel.

It is also preferable that the radiating section is made of pure copper, copper alloy or aluminum alloy.

It is also preferable that the rate of the thickness of the solid relative to that of the radiating section is changed, depending upon the shape and thickness of the product thus molded, to adjust the thermal conductivity of the whole mold.

It is also preferablele that the radiating section is formed at a desired portion of the solid or body frame, depending upon the shape and thickness of the product molded, to make this portion of the solid composite.

That portion of the mold through which heat is transmitted from the surface of glass is repeatedly cooled and heated. The surface of glass is quickly cooled and hardened from the instant when glass is contacted with the work surface of the mold. Glass is thus shrunk and released from the work surface of the mold.

Usually, heat is firstly transmitted, at the time of the molding process, from glass molded to the work surface of the mold (heat transfer between members) and then from the outer face of the work section to the surface of the radiating section through the heat transfer. It is then discharged outside from the surface of the radiating section (convection and radiation).

When the heat transfer is considered, therefore, there are two contact boundary areas to take into consideration. One of them is a first contact boundary area present between the work surface of the mold and glass and the other a second contact boundary area present between the outer work surface of the mold and atmosphere outside.

In the case of the press-molding manner, the heat transfer is quite excellent in the first contact boundary area because glass and the work surface of the mold are closely contacted with each other by the plunger inserted.

The heat transfer in the second contact boundary area, however, depends upon the temperature difference between the outer heat radiating face of the mold and atmosphere outside. In the case of the conventional mold made of cobalt alloy or nickel alloy or stainless steel, low in thermal conductivity, therefore, the heat transfer from the work section to the radiating section is quite slow and the temperature of the radiating section is thus made low. As the result, the heat transfer in the second contact boundary area becomes extremely slow, thereby making it more difficult to quickly cool the mold.

In the case of the mold of the present invention, however, the work section is made of cobalt alloy or nickel alloy or stainless steel, excellent in heat-resistances, to increase the durability of the surface of the work section. In addition, the radiating section which is contacted with atmosphere outside or a coolant is made of pure copper, copper alloy or aluminum alloy, excellent in thermal conductivity. The surface of the work section can have a higher durability accordingly and heat can be more quickly transmitted from the work section to the radiating section to raise the temperature of the radiating section surface. The temperature difference of the radiating section relative to atmosphere outside can be thus increased to make larger the amount of heat radiated from the whole of the mold.

In the case of such tools as the core and the plunger, their outer face serves to contact the matter to be molded while the work surface serves to radiate heat. To add more, only those portions of the mold which contact the thick portions of the vessel molded may be made composite if it is needed because of the shape of the vessel. In addition, the rate of the thickness of the work section relative to that of the radiating section may be adjusted. The thermal conductivity of the whole mold can be thus adjusted to keep the temperature of the work surface in the optimum temperature range.

This invention can be more fully understood from the following detailed description when taken in conjunction with the accompanying drawings, in which:
Fig. 1 is a layout plan showing a press molding machine of a turntable type wherein vessel forming molds according to the present invention are used;
Fig. 2 shows a plunger pushed into a block mold;
Fig. 3 is a vertically-sectioned view showing a body frame which is a part of a block mold;
Fig. 4 is a vertically-sectioned view showing a casting in which a body frame is made;
Fig. 5 is a vertically-sectioned view showing a plunger;
Fig. 6 is a vertically-sectioned view showing a casting in which a plunger is made;
Fig. 7 is a chart intended to explain the process of molding glass cups in a molds according to a present invention;
Fig. 8 is a vertically-sectioned view showing a body frame which is a part of the vessel forming mold according to another embodiment of the present invention;
Fig. 9 is a graph showing how the thermal conductivity changes as the rate of the thickness of the whole mold relative to that of the radiating section is changed;
Fig. 10 is a vertically-sectioned view showing the mold according to a further embodiment of the present invention;
Fig. 11 is a vertically-sectioned view showing a conventional mold; and
Fig. 12 is a graph showing temperature distributions in each of work sections of our mold and conventional mold to compare the effect obtained by our mold with that obtained by the comparison mold.

Some embodiments of the present invention will be described with reference to the accompanying drawings.

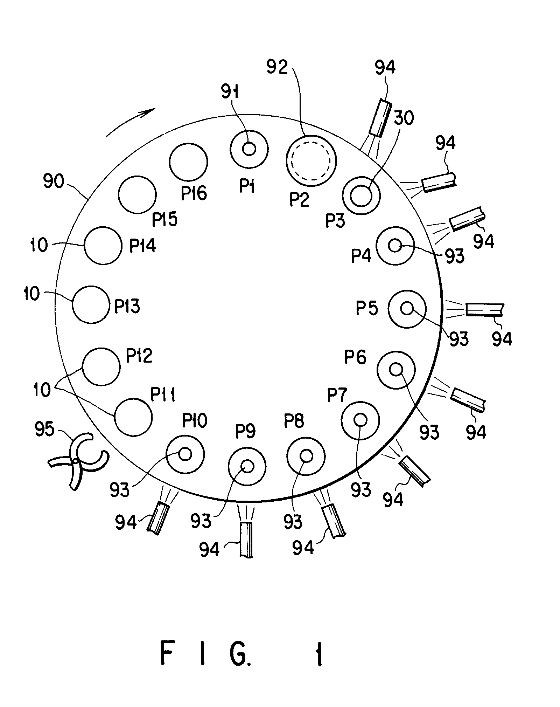

As shown in Fig. 1, sixteen block molds 10 are set, at a certain interval, on the top and along the peripheral portion of a turntable 90 of a shaping machine of the automatic press type. The turntable 90 is rotated intermittently and clockwise by a drive system (not shown). When the turntable 90 finishes its rotation one time, each of the mold blocks 10 is temporarily stopped at each of positions P1 - P16.

Arranged above the turntable 90 are a spray nozzle 91, a gob feeder 92, a plunger 30, plural cooling nozzles 93 and a tong 95. Plural cooling nozzles 94 are also arranged sideways the turntable 90.

The spray nozzle 91 directs its spray outlet to the cavity of the block mold 10 which is stopped at the position P1. It is communicated with a release agent supply tank (not shown) via a flow rate adjusting valve (not shown). It is supported by a lifter system (not shown) and moved up and down by a certain stroke by this lifter system.

The gob feeder 92 can be moved up and down by a lifter system (not shown) at the P2. At the time of gob supply, it directs its supply opening to the cavity of the block mold 10 which is stopped at the position P2. Stored in a supply tank of the feeder 92 is molten soda glass whose temperature has been adjusted to a certain one.

The plunger 30 can be moved up and down by a lifter system (not shown) at the P3. At the time of press process, its bottom is positioned to face the cavity of the block mold 10 which is stopped at position P3.

The cooling nozzles 93 are faced openings of their corresponding block molds 10 which are stopped at the positions P4 - P10.

The other cooling nozzles 94 are faced sides of their corresponding block molds 10 which are stopped at the positions P3 - p10. More specifically, two side nozzles 94 are faced the side of that block mold 10 which is stopped at the position P3, while one side nozzle 94 is faced the side of each of those block molds 10 which are stopped at the positions P4 - P10.

The nozzles 93 and 94 are communicated with an air supply source (not shown). The number of those side nozzles 94 which are positioned facing the position P3 may be three or four.

The tong 95 is faced the opening of the block mold which is stopped at the position P11. It serves to take out a glass product out of the block mold 10. Its drive system is associated with a drive system for a push-up rod (not shown) located under the turntable 90. This association is controlled by a controller (not shown) backed up by a computer system.

The output side of the controller is connected to the intermittent drive system for the turntable 90, the release agent supply system for the spray nozzle 91, the gob supply system for the feeder 92, and the air supply system for the cooling nozzles 93, 94, respectively. In other words, these systems are controlled to associate with one another by the controller.

Cleaners (not shown) are arranged at the positions P12 - P16 to clean the block molds 10 at these positions.

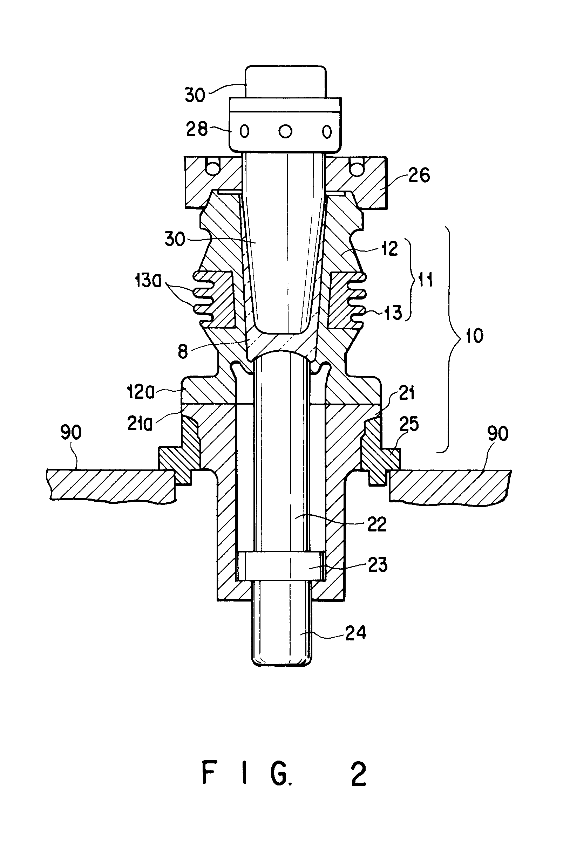

The block mold 10 and the plunger 30 will be described referring to Fig. 2.

Each of the block molds 10 is mounted on the top of the turntable 90 through a basket 25. The block mold 10 is a combination of body and lower frames 11 and 21. The body and lower frames 11 and 21 are connected each other at their coupling flanges 12a and 21 a. The body frame 11 is seated on the basket 25 and erected from, the top of the turntable 90 with its open top facing the plunger 30.

The plunger 30 has a flat bottom and it is a little tapered from top to bottom. An eye metal 26 is fitted onto it. Its top is connected to a lifter system (not shown) and it can be therefore moved up and down together with the eye metal 26 by the lifter system.

The hollow portion of the body frame 11 is communicated with that of the lower one 21. A push-up core rod 22 is fitted into the hollow portion of the lower frame 21. The push-up core rod 22 passes through a seal member 23. A cylinder rod (not shown) is located under the turntable 90 and just under the bottom of a lower portion 24 of the push-up core rod 22. The plunger 30 and the body frame 11 contour inner and outer sides of half-molten glass 8 and the bottom thereof, the eye metal 26 the top thereof, and the push-up core rod 22 pushed into the lower frame 21 contours the underside thereof.

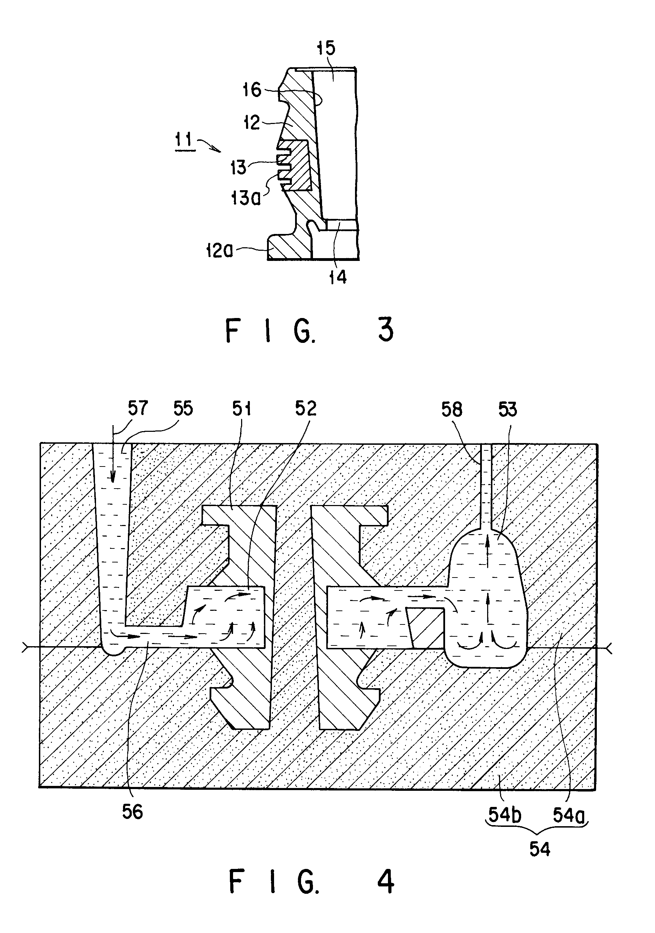

As shown in Fig. 3, a radiating section 13 is formed round the center portion of a work section 12 of the body frame 11. Plural fins 13a are formed round the radiating section 13. The depth of each groove adjacent to the fin 13a is about 10 mm and its width about 5 mm. The work section 12 of the body frame 11 has a tapered inner face 16 and the plunger 30 is pushed into a hollow portion 15 in the work section 12 of the body frame 11. The work section 12 of the body frame 11 is made of SUS431 according to the JIS standards. The radiating section 13 is made of pure copper casting.

A method of manufacturing the body frame 11 of the block mold 10 will be described with reference to Fig. 4.

A metal member 51 which is to form the work section 12 of the body frame 11 is embedded into a sand casting 54. The metal member 51 has been formed to a desired shape by cutting cast SUS431 stainless steel. The inner face of the metal member 51 has a margin for final finish. The sand casting 54 can be divided into upper and lower halves 54a and 54b.

A pattern (not shown), a gate rod (not shown), a degaussing rod (not shown) and the metal member 51 are arranged in a molding box (not shown). The molding box is then filled with sand, which is pounded solid. The pattern, the gate rod and the degaussing rod are then pulled out of the molding box. The molding box is turned upside down. The upper half 54 is thus formed, having a desired shape. The upper half 54a is put on the lower half 54b. The sand casting 54 is thus finished.

Molten pure copper is poured into a cavity 52 in the sand casting 54 through a gate 54. The molten pure copper has a temperature made higher by 150 - 200 °C than that usually used in pure copper pouring. The molten pure copper flows from the cavity 52 into a pool 53 and gas is discharged outside through a degaussing passage 58.

The pool 53 causes the molten pure copper to forcibly flow through the cavity 52 just after the start of casting. Therefore, the molten pure copper of high temperature can be kept flowing in contact with the surface of the metal member 51 until this metal surface begins to partly melt in the cavity 52. After the flow of the molten pure copper is stopped in the cavity 52, therefore, a desirable alloy layer has been formed between the member 51 and solid copper to strongly bond them to each other. The body frame of the present invention is thus finished by enclosing the cool stainless steel member 51 with cast pure copper.

The volume V of the pool 53 depends upon the rate Ct of heat capacities between the solid (or metal member 51) and the radiating solid (or solidified copper in the cavity 52). When the heat capacity rate Ct is large, the volume V of the pool 53 is made large. When it is small, however, the volume V of the pool 53 is made small.

The heat capacity rate Ct becomes quite large, depending upon the final shape of glass product, and the volume V of the pool in this case must be made large accordingly. This causes the molten pure copper not to be strongly bonded to the metal member 51 in the cavity 52, thereby increasing the cost of the block mold thus produced. This problem can be solved as follows: That face of the metal member 51 which is exposed in the cavity 52 is aluminum-plated and the thermit-reacted heat of aluminum and pure copper is used in the casting. The volume V of the pool 53 can be thus made small.

Thermal analysis was conducted about the volume of the pool 53 and the casting temperature on the basis of the shape of the solid and radiating section of the block mold by computer simulation. As the result, the surface of the solid of the block mold is set to have a temperature at least higher than 800 _{°} C at the time of casting.

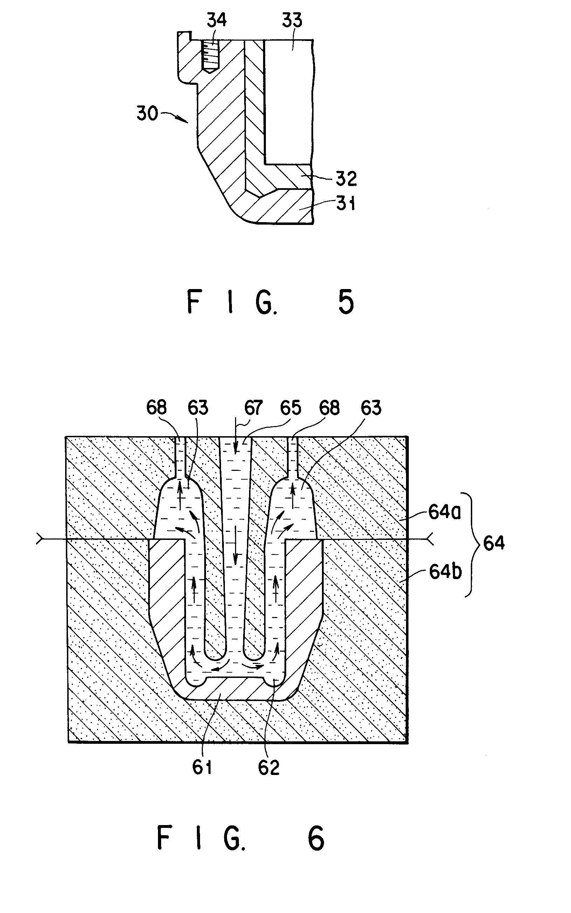

The plunger 30 will be described referring to Fig. 5.

A cooling water passage 33 is formed in the plunger 30. It is enclosed by a radiating section 32. An outer solid 31 of the plunger 30 is made of cast nickel alloy including 80 weight% of Ni, 10 weight% of Cr and 2 weight% of B. The radiating section 32 is made of pure copper cast. Reference numeral 34 denotes one of plunger-attaching bolt holes.

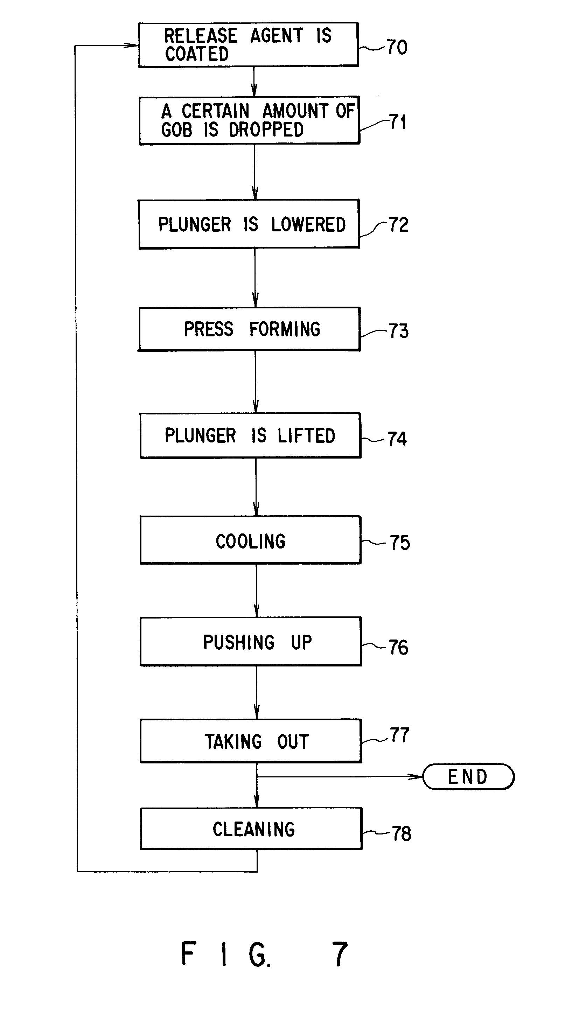

Referring to Fig. 6, it will be described how the plunger 30 is made.

A metal member 61 which is to form the solid of the plunger 30 is embedded in a sand casting 64. The metal member 61 has been formed to a desired shape by cutting a mass of nickel alloy casting and it has a margin for final finish on the work surface. The sand casting 64 can be divided into upper and lower halves 64a and 64b.

A pattern (not shown), a gate rod (not shown), a degaussing rod (not shown) and the metal member 61 are arranged in a molding box (not shown). The molding box is filled with sand, which is pounded solid. The pattern, the gate rod and the degaussing rod are pulled out of the molding box. When the molding box is turned upside down, the upper half 64a having a desired shape is formed. Further, when this upper half 64a is put on the lower half 64b, the sand casting 64 is formed.

Molten pure copper is poured into a cavity 62 in the sand casting 64 through a gate 67. The molten pure copper used has a temperature higher by 150 - 200 °C than that usually used in the pure copper pouring. The molten pure copper flows into a pool 63 through the cavity 62 and gas is discharged outside through a degaussing passage 68.

The pool 63 enables the molten pure copper to forcibly flow through the cavity 62 just after the start of casting. More specifically, the molten pure copper of high temperature is thus kept flowing in contact with the surface of the metall member 61 until the surface of the metal member 61 is partly melted in the cavity 62. After the flow of the molten pure copper in the cavity 62 is stopped, therefore, a desirable alloy layer can be formed between the member 61 and the solidified copper to strongly bond them to each other. The plunger of the present invention is finished when the cool nickel alloy casting 61 is plated with the pure copper in this manner.

Also in this case, the volume of the pool 63 can be made small when the metal member 61 is partly plated to use the thermit reaction.

Referring to Fig. 6, it will be described how glass cups are made by the molding machine of the automatic press type.

The block mold 10 which has been cleaned is located at the position P1. Release agent is jet- sprayed into the cavity of the block mold 10 through the nozzle 91. The inner face of the block mold 10 is thus coated with the release agent (Step 70).

The turntable 90 is rotated by a sixteenth to locate the block mold 10 at the position P2 (or just under the gob feeder 92). The push-up core rod 22 is now at the position where its top portion closes the open bottom of the body frame 11.

A certain amount of gob is dropped from the feeder 92 into the body frame 11 (71). The gob of molten soda glass has a temperature of about 1150°C. The used inner face 16 of the body frame 11 has a temperature of about 500 _{°} C.

The turntable 90 is further rotated by a sixteenth to locate the body frame 11, into which the gob has been dropped, right under the plunger 30. The plunger 30 is lowered (Step 72).

The plunger 30 is pushed into the body frame 11 to such a position as shown in Fig. 2 to press- mold the gob (Step 73). The gob is thus molded to a desired form 8. The temperature of the used work surface 16 of the body frame 11 is now increased to about 700 - 800 _{°} C.

The plunger 30 is lifted to its retreated position (Step 74).

While rotating the turntable 90 once by a sixteenth, the block mold 10 in which the molded form 8 is held is located at each of the positions P4 - P10. Every time the block mold 10 is located at each position, cooling air is blown to the molded form 8 through the cooling nozzle 93 and to the body frame 11 through the cooling nozzle 94. The molded form 8 is thus forcedly cooled to a temperature of about 700 °C (Step 75). When cooling air is blown in this manner for a total of about 16 seconds, the molded form 8 can be completely hardened. The used inner face 16 of the body frame 11 is now lowered to a temperature of about 550 _{°} C.

The turntable 90 is further rotated by a sixteenth to locate the molded form 8 in the block mold 10 at the position P11. The push-up core rod 22 is lifted to push the molded form 8 upward from the body frame 11 (Step 76).

The molded form 8 thus pushed up is grasped and picked up by the tong 95 out of the block mold 10 and carried to a storage room (Step 77). The glass cup manufacturing process may be finished by this step 77, if necessary.

While rotating the turntable 90 once by a sixteenth, the block mold 10 is cleaned from the position P12 to the position P16 (Step 78). The block mold 10 is thus returned to the position P1 and the process starting from the release agent coating step 70 and ending with the cleaning step 78 is again repeated.

While intermittently rotating the turntable 90 as described above, glass cups can be successively made at a speed of about 32 seconds (including the press time of about 2 seconds) in a molding cycle.

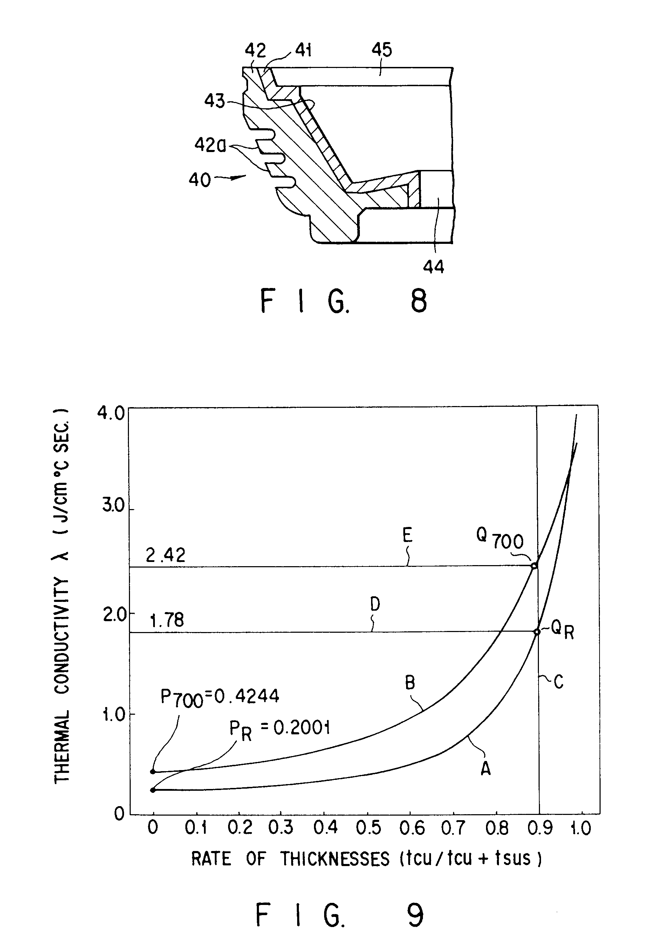

Although glass cups have been made in the above case, tube shown in Fig. 8 may be made instead.

In the case of a body frame 40 used to make glass tubs, a work section 41 of the body frame 40 is covered all over its outer face by a radiating section 42. Plural radiating fins 42a are formed round the radiating section 42. The depth of a groove adjacent to the fin 42a is about 15 mm and its width about 5 mm. The work section 41 and the radiating section 42 is about 1 : 4 in thickness. The work section 41 is made of cast cobalt alloy including 60 weight% of Co, 28 weight^{*} of Cr and 7 weight% of W. The radiating section 42 is made of cast pure copper. To add more, the push-up core rod is inserted, from below, into an open bottom 44 of the body frame 40 and the plunger into the open top thereof from above.

According to the block mold having this body frame 40, glass tubs each having a thickness of 4mm can be made in a molding cycle of about 16 seconds without impairing the characteristic of the used inner face of the body frame 40 and breaking any product thus made.

Fig. 9 shows how the thermal conductivity of the block mold changes when the rate R of thicknesses is variously changed. R represents the rate (tcu/(tcu + tsus)) of the thickness (tcu + tsus) of a composite composed of the SUS-stainless-steel-made solid and the pure-copper-made radiating section relative to the thickness (tcu) of the pure-copper-made radiating section, and denotes the thermal conductivity of the whole composite. In Fig. 9, the rate R of these thicknesses is plotted on the horizontal axis and the thermal conductivity of the whole composite on the vertical axis. A curve A represents results obtained at room temperature and a curve B results obtained at a temperature of 700C. Further, a point P_{R} denotes the result of the thermal conductivity obtained of the conventional SUS-stainless-steel-made mold at room temperature and a point P₇₀₀ the result of the thermal conductivity obtained of the same mold at the temperature of 700 _{°} C. As apparent from Fig. 9, the thermal conductivity is increased more and more as the rate R of thicknesses becomes larger and when the rate R of thicknesses becomes larger than 0.7, the thermal conductivity is remarkably increased.

In Fig. 9, those points at which a vertical straight line C erected at a thickness rate of 0.9 is crossed the curves A and B are represented by Q_{R} and Q₇₀₀. Values (1.78 and 2.42) of the thermal conductivity obtained from these crossed points Q_{R} and 0₇₀₀ are shown on horizontal straight lines D and E. The thermal conductivity of our mold becomes 8.9 times larger at normal temperature and 5.7 times larger at 700 °C, as compared with that of the conventional mold.

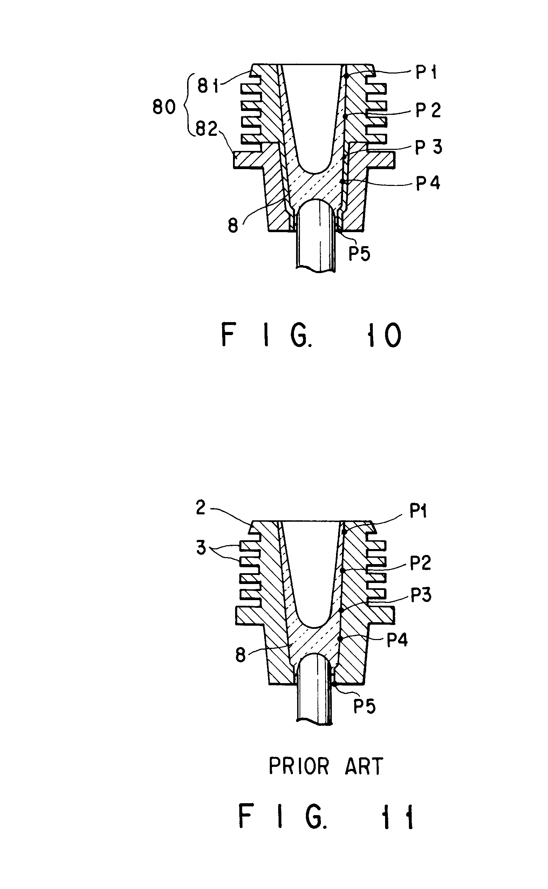

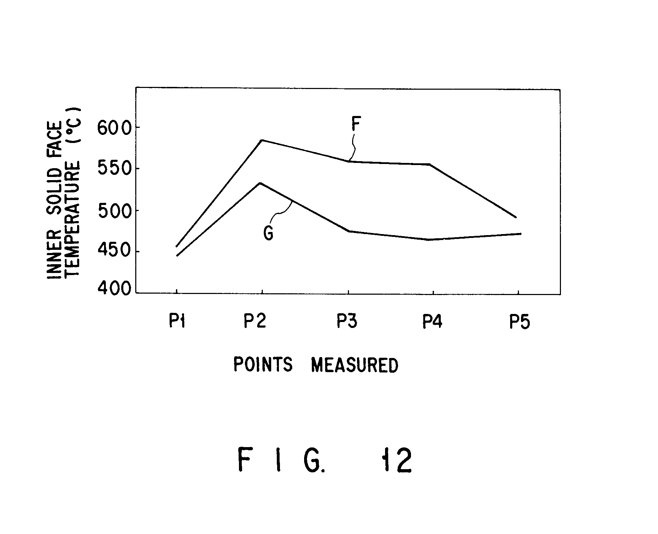

Fig. 10 shows another mold 80 according to the present invention and Fig. 11 shows a mold 2 which is to be compared with the mold 80. Both of them are same in shape and dimension. The mold 80 is a composite composed of an SUS431- stainless-steel-made work section 81 and a pure-copper-made radiating section 82. The work section 81 has a thickness of 3 mm and the radiating section 82 a thickness of 27 mm. On the other hand, the whole mold 2 is made of stainless steel. Temperatures at points P1 - P5 in Fig. 10 were measured at the time of glass molding process. The conditions under which glass is molded in the both molds are same but materials of which the both molds are made are different.

Fig. 12 is a graph showing a temperature distribution in our mold 80 and that in the comparison mold 2. In Fig. 12, points at which temperature is measured are plotted on the horizontal axis and temperatures at the used inner faces of the molds are plotted on the vertical axis. A polygonal line F denotes results obtained of the temperature distribution of the mold 2 and a polygonal line G those obtained of that of the mold 80.

As apparent from Fig. 12, the temperature at the used inner face of the comparison mold 2 amounts up to about 560 °C because the amount of glass 8 is larger at bottom points P3 and P4. In contrast, the temperature at the used inner face of our mold 80 becomes about 470 _{°} C, which is lower by about 90 _{°} C than that in the case of the comparison mold 2. This enables the time needed to finish one molding cycle to be shortened to a greater extent.

Although the mold of the present invention has been used as the block mold at the press-molding process, it may be used instead as the separate type mold at the press-molding process.

Further, the mold of the present invention can also be used at various molding processes such as the blow and blow, press and blow and press and vacuum molding processes.

According to the mold of the present invention, the thermal conductivity of the whole mold can be adjusted from a value adjacent to that of material of which the radiating section is made to a value adjacent to that of material of which the work section is made, when the rate of thicknesses of the work section and the radiating section is changed.

Further, the thermal conductivity can also be adjusted only at those desired portions of the mold. The mold can be therefore designed to meet any shapes and sizes of containers molded. This enables the molding efficiency to be made maximum.

Furthermore, the work section and the radiating section of the mold are made of different metals but a desirable alloy layer can be formed between the work section and the radiating section. As compared with the conventional cases where the work section and the radiating section are connected, only physically contacting with each other, by bushes and copper pins, therefore, a more stable thermal conductivity can be obtained to carry out a more stable molding process for a longer time.

Still further, the used inner face of the mold can be less oxidized and worn to keep the mold practical for a longer time. In addition, the time needed to finish one molding cycle can be shortened to greater extent.

## Claims

1. A mold for forming vessel made of glass comprising:
a work section (12, 31, 41) being in contact with a gob of molten glass, and
a radiating section (13, 32, 42) being in contact with a coolant and provided onto an outside portion or an inside portion of the work section (12, 31, 41),
characterized in that the work section (12, 31, 41) has heat resistance and abrasion resistance, and is made of an alloy having a wettability suitable for the gob of molten glass,
and wherein said radiating section (13, 32, 42) is made of a metal or alloy, of which coefficient of thermal conductivity is greater than that of the work section (12, 31, 41).

2. The mold according to claim 1, characterized in that said work section (12, 31, 41) is made a member selected from the group consisting of cobalt alloy, nickel alloy and stainless steel, and said radiating section (13, 32, 42) is made of a member selected from the group consisting of pure copper, copper alloy and aluminum alloy.

3. The mold according to claim 1, characterized in that the rate of the thickness of the work section (12, 31, 41) relative to the thickness of the radiating section (13, 32, 42) is changed according to the shape and the thickness of the vessel to be molded.

4. The mold according to claim 1, characterized in that said radiating (13, 32, 42) section is formed at a desired portion of the work section (12, 31, 41) according to the shape and the thickness of the vessel to be molded.

5. The mold according to claim 2, characterized in that said radiating section (13, 32, 42) is formed at a desired portion of the work section (12, 31, 41) according to the shape and the thickness of the vessel to be molded.

6. The mold according to claim 3, characterized in that said radiating section (13, 32, 42) is formed at a desired portion of the work section (12, 31, 41) according to the shape and the thickness of the vessel to be molded.

7. The mold according to claim 3, characterized in that the rate of the thickness of the work section (12, 31, 41) relative to the thickness of the radiating section (13, 32, 42) is made larger than 0.7.

8. The mold according to claim 1, characterized in that said radiating section (13, 42) having fins (13a, 42a) is provided to the outside portion of the work section (12, 41).

9. The mold according to claim 1, characterized in that said radiating section (32) to be contacted with a cooling water is provided onto the inside portion of the work section (31).
